# EUROPÄISCHE PATENTSCHRIFT

(11) **EP 0 850 855 B1**
(45) Veröffentlichungstag und Bekanntmachung des Hinweises auf die Patenterteilung: **23.05.2001**
(21) Anmeldenummer: 97121026.5
(22) Anmeldetag: 29.11.1997
(51) Int. Cl.: B65D 88/74, F16K 15/04

(54) **Selbsttätige Entwässerungsvorrichtung für Frachtcontainer oder andere Ladungen aufnehmende Räume**
Self-acting drainage device for freight containers or other loadable containers
Dispositif de drainage automatique pour conteneurs à marchandises ou autre conteneurs de conditionnement

(30) Priorität: 02.12.1996 DE 19649864
(43) Veröffentlichungstag der Anmeldung: 01.07.1998
(73) Patentinhaber: Waggonbau Elze GmbH & Co. Besitz KG, 31008 Elze (DE)
(72) Erfinder: Kothe, Horst, Ing., 31032 Betheln (DE); Teepe, Stephan, Dipl.-Ing., 31008 Elze (DE)
(74) Vertreter: Gosch, Wolf-Dietrich

(56) Entgegenhaltungen:
- DE-U- 9 102 782
- US-A- 1 953 007

## Beschreibung

Die Erfindung betrifft eine Anordnung einer selbsttätigen Entwässerungsvorrichtung für Frachtcontainer oder andere Ladungen aufnehmende Räume, mit einem im wesentlichen zylindrischen Außengehäuse mit offenen Endabschnitten und einer mit einer Durchgangsöffnung versehenen Ventilplatte zwischen den beiden Endabschnitten, der auf der Oberseite ein erstes aufschwimmfähiges Schließorgan für die Durchgangsöffnung zugeordnet ist.

Eine derartige selbsttätige Entwässerungsvorrichtung ist in der EP-A-0 503 544 sehr anschaulich dargestellt.

Mit dieser Entwässerungsvorrichtung konnte das im Innenraum eines Containers entstehende Wasser, z. B. Schwitzwasser, beim Transport von Früchten u. a. sicher aus dem Innenraum des Containers entfernt werden. Da sich diese Entwässerungsvorrichtung nach dem Entfernen des Wassers aus dem Innenraum selbsttätig wieder verschließt, strömt auch z. B. keine Kühlluft aus dem Container durch die Entwässerungsvorrichtung aus, wenn es bei dem Container um einen Kühlcontainer handelt.

Es hat sich jedoch gezeigt, daß die Entwässerungsvorrichtung nicht hinreichend dicht gegen von außen in den Container eindringendes Wasser ist Wenn beispielsweise der Container als Decksladung auf einem Seeschiff angeordnet ist und dieses bei rauher See auch in größeren Mengen Seewasser übernimmt, kann es passieren, daß der Container mit seinen unteren Bereichen vergleichsweise tief in das Wasser eintaucht und das Wasser in unerwünschter Weise das aufschwimmfähige erste Schließorgan von der Durchgangsöffnung abhebt und dann das Wasser in den Innenraum des Containers einströmt, wodurch die Ladung beschädigt wird.

Es ist eine weitere Entwässerungsvorrichtung bekannt, die eine vergleichsweise große Bauhöhe aufweist und die mit einer nach unten aus dem Containerboden herausragenden, die Auslaßöffnung weitgehend abdeckende Gummitülle aufweist. Für moderne Kühlcontainer mit flachen Böden ist diese Konstruktion jedoch zu hoch gebaut, die Dichtungswirkung ist nur sehr unvollkommen und wird ganz aufgehoben, wenn die Gummitülle auf dem Transport verloren wird, was oft geschieht.

Aus der US-A-3 930 918 ist eine Vorrichtung bekannt, die das Einströmen von Wasser in einen entwässerten Raum verhindert. Dazu wird ein Rückschlagventil eingesetzt. Dieses Rückschlagventil besteht aus einer zylinderischen Ventilplatte mit einem auf der Unterseite angeordneten aufschwimmfähigen Schließorgan. Sobald Wasser von unten einströmt, verschließt dieses die Durchgangsöffnung der Ventilplatte von unten.

Aufgabe der vorliegenden Erfindung ist es daher, eine selbsttätige Entwässerungsvorrichtung der eingangs genannten Art so zu verbessern, daß kein drückendes Wasser von außen in den Container einströmen kann.

Diese Aufgabe wird erfindungsgemäß dadurch gelöst, daß das Außengehäuse in einem in Mehrschichtenbauweise konstruierten Containerboden in der Weise angeordnet ist, daß ein am Außengehäuse an seinem oberen Ende vorgesehener Befestigungsflansch an einer Unterseite einer dem Laderaum zugekehrten Innenplatte abdichtend befestigt ist und das Außengehäuse mit einer Unterseite in einer becherförmigen Aufnahme angeordnet ist, die an einer Außenplatte des Containerbodens befestigt ist und daß der Ventilplatte auf ihrer Unterseite ein zweites aufschwimmfähiges Schließorgan für die Durchgangsöffnung zugeordnet ist.

Diese erfindungsgemäße Vorrichtung hat den Vorteil, daß das von außen in den Container strebende Wasser das zweite aufschwimmfähige Schließorgan gegen die Durchgangsöffnung drückt und diese zuverlässig verschließt, bis das von außen hinzutretende Wasser wieder abgeströmt ist. In dem Augenblick gibt das zweite Schließorgan die Durchgangsöffnung wieder frei und durch diese kann etwa im Innenraum des Containers noch vorhandenes Schwitzwasser abfließen.

Weitere Einzelheiten der Erfindung ergeben sich aus der nachfolgenden ausführlichen Beschreibung und den beigefügten Zeichnungen, in denen eine bevorzugte Ausfüh rungsform der Erfindung beispielsweise veranschaulicht ist.

In den Zeichnungen zeigen:

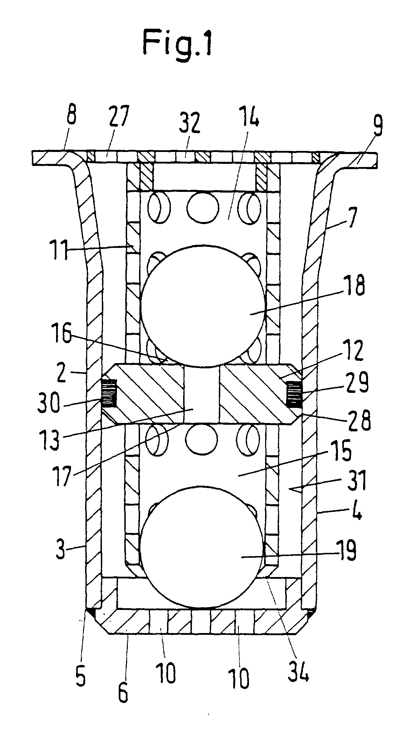

- Figur 1: einen zentralen Längsschnitt durch eine erfindungsgemäße Entwässerungsvorrichtung in schematischer Darstellung,

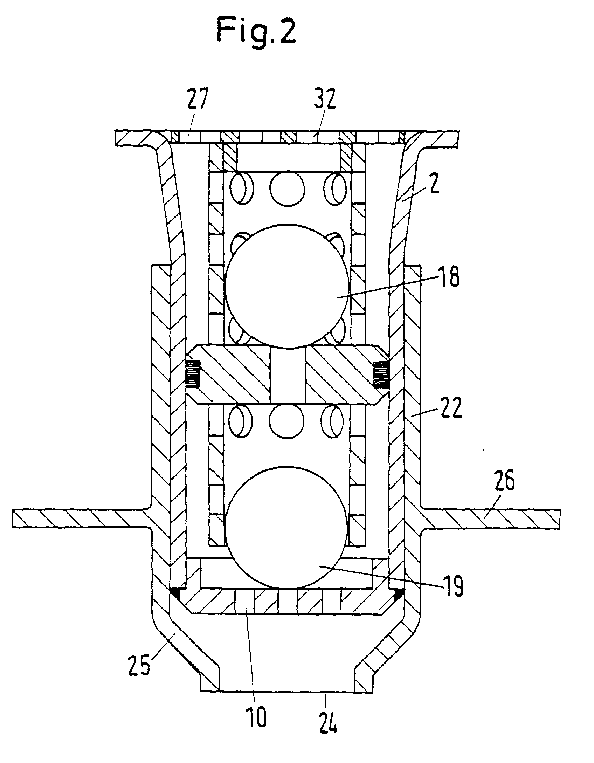

- Figur 2: eine Darstellung gemäß Figur 1 mit einer zur Befestigung der Vorrichtung in einem Containerboden vorgesehenen Aufnahme
und

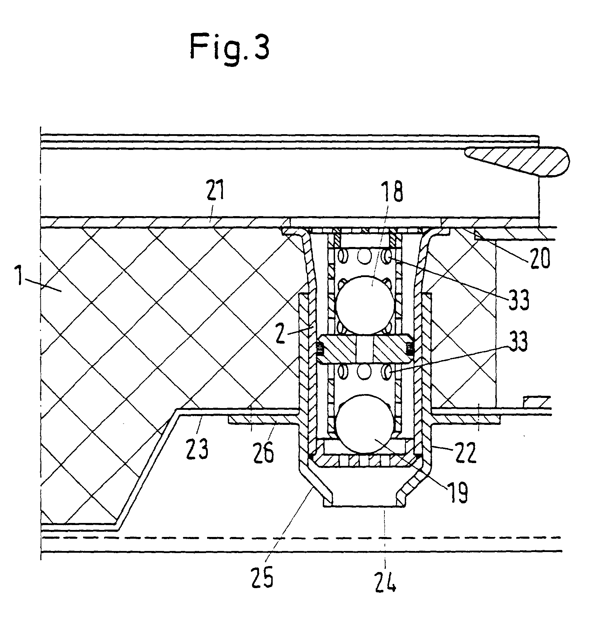

- Figur 3: eine Darstellung gemäß Figur 1 in ihrer Anordnung in einem Mehrschichtboden eines Kühlcontainers.

Die in einem Containerboden 1 einzulassene Vorrichtung weist ein Außengehäuse 2 auf, das in seinem längeren unteren Bereich 3 als ein glatter Rohrabschnitt 4 ausgebildet ist, der an seiner Unterseite 5 mit einem Deckel 6 im wesentlichen verschlossen ist. An diesem Rohrabschnitt 4 ist oben ein trichterförmig sich erweiternder Rohrabschnitt 7 angesetzt, der am oberen weiteren Ende 8 mit einem nach außen gerichteten Befestigungsflansch 9 endet. Im Deckel 6 ist ein Loch 10 zentral und um dieses herum konzentrisch mehrere Löcher 10 angeordnet.

Vom oberen Ende 8 her ist in das Außengehäuse 2 ein Ventilkorb 11 herausnehmbar eingesetzt. Der Ventilkorb 11 weist eine zylindrische Ventilplatte 12 auf, die mit einer zentralen Durchgangsöffnung 13 versehen ist und der Außendurchmesser dem Innendurchmesser des Außengehäuses 2 in seinem glatten Rohrabschnitt 4 entspricht. Die Ventilplatte 12 trennt den Ventilkorb 11 in eine obere Ventilkammer 14 und eine untere Ventilkammer 15, die beide über die zentrale Durchgangsöffnung 13 miteinander verbunden sind. Dabei bildet die zentrale Durchgangsöffnung 13 im Bereich der oberen Ventilkammer 14 einen oberen Ventilsitz 16 und im Bereich der unteren Ventilkammer 15 einen unteren Ventilsitz 17 aus. In der oberen Ventilkammer 14 befindet sich das erste aufschwimmfähige Schließorgan 18 und in der unteren Ventilkammer 15 das zweite aufschwimmfähige Schließorgan 19, die beide vorzugsweise als hohle Kunststoffkugeln ausgebildet sind. Dabei sind die Ventilsitze 16 und 17 den Oberflächenverläufen der Schließorgane 18, 19 abdichtend angepaßt.

Die Vorrichtung wird in einem in Mehrschichtenbauweise konstruierten Containerboden 1 in der Weise angeordnet, daß der am oberen Ende 8 des Außengehäuses 2 vorgesehene Befestigungsflansch 9 an seiner Oberseite an einer Unterseite 20 einer dem Laderaum zugekehrten Innenplatte 21 des Containerbodens 1 abdichtend befestigt ist, während das Außengehäuse 2 mit seiner Unterseite 5 in einer becherförmigen Aufnahme 22 angeordnet ist, die an einer Außenlatte des Containerbodens 1 befestigt ist. Die Aufnahme 22 ragt dabei über die Außenplatte 23 nach unten heraus. Sie hat an ihrem unteren Ende 24 ein die Löcher 10 im Deckel 6 abschirmendes tüllenartiges Endstück 25. Benachbart zur Außenplatte 23 ist die Aufnahme von einem Ringflansch 26 umgeben, mit dem sie an der Außenplatte 23 befestigt ist

Wenn das Außengehäuse 2 im Containerboden 1 befestigt ist, wird zunächst das zweite aufschwimmfähige Schließorgan 19 eingesetzt. Alsdann wird der Ventilkorb 11 soweit in das Außengehäuse 2 eingeführt, bis sich ein an seinem oberen Ende be findlicher ringförmiger Halteflansch 27 im Bereich des erweiterten Rohrabschnittes 7 am oberen Ende 8 des Außengehäuses 2 festlegend anliegt. Dabei legt sich ein im Außenumfang 28 der Ventilplatte 12 in einer Umfangsnut 29 vorgesehener vorgespannter Dichtungsring 30 abdichtend an der Innenwand 31 des Außengehäuses 2 im Bereich seines glatten Rohrabschnittes 4 an.

Alsdann wird in die obere Ventilkammer 14 das erste aufschwimmfähige Schließorgan 18 eingelegt und die obere Ventilkammer 14 mit einem mit Löchern 32 versehenen oberen Deckel abgedeckt. Damit ist die erfindungsgemäße Entwässerungsvorrichtung betriebsfertig montiert.

Wie bei der vorbekannten Vorrichtung wird aus dem Innenraum des Containers dort befindliches Wasser zunächst im Bereich der oberen Ventilkammer 14 und ihre Umgebung im oberen Bereich des Außengehäuses 2 gesammelt, bis das erste Schließorgan 1 aufschwimmt und die zentrale Durchgangsöffnung 13 der Ventilplatte 12 freigibt, so daß das Wasser durch diese Durchgangsöffnung 13 hindurchtreten und über die Löcher 10 im Deckel 6 nach außen abschließen kann. Wenn nun von außen drückendes Wasser (sogenanntes grünes Wasser) in den Innenraum des Containers strebt, sammelt sich in und um die untere Ventilkammer 15 des Ventilkorbes 11 soviel Wasser an, bis das zweite aufschwimmfähige Schließorgan 19 angehoben und von unten an dem unteren Ventilsitz 17 an der zentralen Durchgangsöffnung 13 der Ventilplatte 12 gedrückt wird und damit die zentrale Durchgangsöffnung 13 verschließt, bis das Wasser wieder aus den Löchern 10 im Deckel 6 abgeflossen ist.

Eine erfindungsgemäße selbsttätige Entwässerungsvorrichtung wird vorzugsweise aus nicht korrodierenden Metallen oder aus Kunststoff gefertigt. Es hat sich gezeigt, daß die Verwendung von Kunststoff (z.B. für die Aufnahme 22) deswegen besonders vorteilhaft ist, weil dadurch Wärmebrücken zwischen dem Innenraum des Containers und der Außenluft zuverlässig vermieden werden können. Die Entwässerungsvorrichtung ist einfach und sicher in der Handhabung, weist eine lange Lebensdauer auf und bedingt durch ihre einfache und sichere Konstruktion kann eine dauerhafte Auf rechterhaltung ihrer Funktionsfähigkeit sichergestellt werden.

## Patentansprüche

1. Anordnung einer selbsttätigen Entwässerungsvorrichtung für Frachtcontainer oder andere Ladungen aufnehmende Räume mit einem im wesentlichen zylindrischen Außengehäuse (2) mit offenen Endabschnitten und einer mit einer Durchgangsöffnung (13) versehenen Ventilplatte (12) zwischen den beiden Endabschnitten, der auf der Oberseite ein erstes aufschwimmfähiges Schließorgan (18) für die Durchgangsöffnung (13) zugeordnet ist, dadurch gekennzeichnet, daß das Außengehäuse (2) in einem in Mehrschichtenbauweise konstruierten Containerboden (1) in der Weise angeordnet ist, daß ein am Außengehäuse (2) an seinem oberen Ende (8) vorgesehener Befestigungsflansch (9) an einer Unterseite (20) einer dem Laderaum zugekehrten Innenplatte (21) abdichtend befestigt ist und das Außengehäuse (2) mit einer Unterseite (5) in einer becherförmigen Aufnahme (22) angeordnet ist, die an einer Außenplatte (23) des Containerbodens (1) befestigt ist und daß der Ventilplatte (12) auf ihrer Unterseite ein zweites aufschwimmfähiges Schließorgan (19) für die Durchgangsöffnung (13) zugeordnet ist.

2. Anordnung einer Entwässerungsvorrichtung nach Anspruch 1, dadurch gekennzeichnet, daß die Ventilplatte (12) mit einem Ventilkorb (11) verbunden ist, der in das Außengehäuse (2) herausnehmbar eingesetzt ist.

3. Anordnung einer Entwässerungsvorrichtung nach Anspruch 2, dadurch gekennzeichnet, daß die Ventilplatte (12) den Ventilkorb (11) in eine obere Ventilkammer (14) und in eine untere Ventilkammer (15) unterteilt.

4. Anordnung einer Entwässerungsvorrichtung nach Anspruch 3, dadurch gekennzeichnet, daß das erste aufschwimmfähige Schließorgan (18) in der oberen Ventilkammer (14) und das zweite aufschwimmfähige Schließorgan (19) in der unteren Ventilkammer (15) angeordnet sind.

5. Anordnung einer Entwässerungsvorrichtung nach Anspruch 1 bis 4, dadurch gekennzeichnet, daß die Schließorgane (18, 19) aus Kugeln bestehen.

6. Anordnung einer Entwässerungsvorrichtung nach Anspruch 1 bis 5, dadurch gekennzeichnet, daß die Ventilplatte (12) im Bereich seiner Durchgangsöffnung (13) an seiner Oberseite einen oberen Ventilsitz (16) und an seiner Unterseite einen unteren Ventilsitz (17) ausbildet, die jeweils den Oberflächen der Schließorgane (18, 19) abdichtend angepaßt sind.

7. Anordnung einer Entwässerungsvorrichtung nach Anspruch 1 bis 6, dadurch gekennzeichnet, daß die Aufnahme (22) über die Außenplatte (23) nach unten herausragt.

8. Anordnung einer Entwässerungsvorrichtung nach Anspruch 1 - 7, dadurch gekennzeichnet, daß die Aufnahme (22) an ihrem unteren Ende (24) ein, Löcher (10) in einem unteren Deckel (6) des Außengehäuses (2) abschirmendes, tüllenartiges Endstück (25) aufweist.

9. Anordnung einer Entwässerungsvorrichtung nach Anspruch 1 - 8, dadurch gekennzeichnet, daß die Aufnahme (22) benachbart zur Außenplatte (23) einen Ringflansch (26) aufweist, mit dem sie an der Außenplatte (23) befestigt ist.

## Claims

1. An arrangement of an automatic drainage device for freight containers or other freight-holding compartments, comprising a substantially cylindrical outer casing (2) with open end portions and a valve plate (12) formed with a passage opening (13) between the two end portions, the top of the valve plate being associated with a first floating means (18) for closing the passage opening (13), characterised in that the outer casing (2) is disposed in a multilayer-construction container bottom (1) so that an underside (20) of a securing flange (9) provided at the top end (8) of the outer casing (2) is fastened in sealing-tight manner to an inner plate (21) facing the freight compartment and an underside (5) of the outer casing (2) is disposed in a cup-like holder (22) fastened to an outer plate (23) of the container bottom (1), and in that a second floating means (19) for closing the passage (13) is associated with the underside of the valve plate (12).

2. An arrangement of a drainage device according to claim 1, characterised in that the valve plate (12) is connected to a valve cage (11) inserted in removable manner into the outer casing (2).

3. An arrangement of a drainage device according to claim 2, characterised in that the valve plate (12) divides the valve cage (11) into a top valve chamber (14) and a bottom valve chamber (15).

4. An arrangement of a drainage device according to claim 3, characterised in that the first floating closure means (18) is disposed in the top valve chamber (14) and the second floating closure means (19) is disposed in the bottom valve chamber (15).

5. An arrangement of a drainage device according to claims 1 to 4, characterised in that the closure means (18, 19) comprise balls.

6. An arrangement of a drainage device according to claims 1 to 5, characterised in that in the region of its passage opening (13) the valve plate (12) has a top valve seat (16) on its top surface and a bottom valve seat (17) on its underside, the valve seats being sealingly adapted to the surfaces of the respective closure means (18, 19).

7. An arrangement of a drainage device according to claims 1 to 6, characterised in that the holder (22) projects downwards beyond the outer plate (23).

8. An arrangement of a drainage device according to claims 1 - 7, characterised in that at its bottom end (24) the holder (22) has a funnel-like end piece (25) which screens holes (10) in a bottom cover (6) of the outer casing (2).

9. An arrangement of a drainage device according to claims 1 - 8, characterised in that the holder (22) has an annular flange (26) adjoining the outer plate (23) for fastening it to the outer plate (23).

## Revendications

1. Agencement d'un dispositif de purge automatique destiné à des conteneurs de transport ou à des compartiments recevant d'autres chargements, avec un corps extérieur (2) sensiblement cylindrique comportant des tronçons d'extrémité ouverts, et une plaque de clapet (12) munie d'un orifice de passage (13) disposée entre les deux tronçons d'extrémité, à laquelle est associé en partie supérieure un premier organe de fermeture (18) pouvant flotter pour l'orifice de passage (13), caractérisé en ce que le corps extérieur (2) est agencé dans le fond (1) d'un conteneur, qui est réalisé en mode de construction multicouche, de telle sorte qu'une bride de fixation (9) prévue sur l'extrémité supérieure (8) du corps extérieur (2) soit fixée de façon étanche sur une face inférieure (20) d'une plaque intérieure (21) orientée vers l'espace de chargement, en ce que le corps extérieur (2) est disposé par une partie inférieure (5) dans une réception (22) en forme de godet, qui est fixée sur une plaque extérieure (23) du fond (1) du conteneur, et en ce qu'un deuxième organe de fermeture (19) pouvant flotter destiné à l'orifice de passage (13) est associé à la face inférieure de la plaque de clapet (12).

2. Agencement d'un dispositif de purge selon la revendication 1, caractérisé en ce que la plaque de clapet (12) est reliée à un panier de clapet (11) qui est inséré de façon amovible dans le corps extérieur (2) .

3. Agencement d'un dispositif de purge selon la revendication 2, caractérisé, en ce que la plaque de clapet (12) subdivise le panier de clapet (11) en une chambre de clapet supérieure (14), et en une chambre de clapet inférieure (15).

4. Agencement d'un dispositif de purge selon la revendication 3, caractérisé en ce que le premier organe de fermeture (18) pouvant flotter est disposé dans la chambre de clapet supérieure (14), et le deuxième organe de fermeture (19) pouvant flotter dans la chambre de clapet inférieure (15).

5. Agencement d'un dispositif de purge selon l'une quelconque des revendications 1 à 4, caractérisé en ce que les organes de fermeture (18, 19) sont constitués de billes.

6. Agencement d'un dispositif de purge selon l'une quelconque des revendications 1 à 5, caractérisé en ce que, dans la zone de son orifice de passage (13), la plaque de clapet (12) forme au niveau de sa face supérieure un siège de clapet supérieur (16), et au niveau de sa face inférieure un siège de clapet inférieur (17), qui sont respectivement adaptés de façon étanche aux surfaces des organes de fermeture (18, 19).

7. Agencement d'un dispositif de purge selon l'une quelconque des revendications 1 à 6, caractérisé en ce que la réception (22) dépasse de la plaque extérieure (23) vers le bas.

8. Agencement d'un dispositif de purge selon l'une quelconque des revendications 1 à 7, caractérisé en ce que la réception (22) comporte au niveau de son extrémité inférieure (24) un embout (25) de type douille, qui protège des trous (10) pratiqués dans un couvercle inférieur (6) du corps extérieur (2).

9. Agencement d'un dispositif de purge selon l'une quelconque des revendications 1 à 8, caractérisé en ce que la réception (22) comporte une bride annulaire (26) au voisinage de la plaque extérieure (23), au moyen de laquelle elle est fixée sur la plaque extérieure (23).
